**Europäisches Patentamt**

**European Patent Office**

**Office européen des brevets**

(19)

(11) Veröffentlichungsnummer: **0 174 440 B1**

(12) **EUROPÄISCHE PATENTSCHRIFT**

(45) Veröffentlichungstag der Patentschrift:
07.01.88

(51) Int. Cl.⁴: **B 65 G 65/46**, B 65 G 47/16

(21) Anmeldenummer: **85106976.5**

(22) Anmeldetag: **05.06.85**

(54) **Vorrichtung zum Zwischenbunkern und gleichmässigen Belegen von Transportbändern mit Schüttgütern, insbesondere mit Zuckerrübenschnitzeln.**

(30) Priorität: **29.08.84 DE 3431626**

(43) Veröffentlichungstag der Anmeldung:
**19.03.86 Patentblatt 86/12**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
AT - B - 177 374
CH - A - 556 289
DE - A - 2 028 577
DE - A - 2 415 593
DE - A - 3 109 562
DE - B - 6 988
US - A - 3 498 505

**PATENT ABSTRACTS OF JAPAN, Band 6, Nr. 193
(M-160)[1071], 2. Oktober 1982**

(73) Patentinhaber: **BABCOCK-BSH AKTIENGESELLSCHAFT
vormals Büttner-Schilde-Haas AG,
Parkstrasse 29 Postfach 4 und 6, D-4150 Krefeld 11 (DE)**

(72) Erfinder: **Tervooren, Fritz, Emil-Schäfer-Strasse 17,
D-4150 Krefeld-Bockum (DE)**
Erfinder: **Kregeloh, Otto, Breitestrasse 104,
D-5600 Wuppertal-Ronsdorf (DE)**
Erfinder: **Meinhardt, Horst, Sandberg 82,
D-4150 Krefeld-Oppum (DE)**

(74) Vertreter: **Pianker, Karl-Josef, Dipl.-Phys., c/o Deutsche
Babcock Anlagen AG Parkstrasse 29 Postfach 4 + 6,
D-4150 Krefeld 11 (DE)**

## Beschreibung

Die Erfindung betrifft eine Vorrichtung gemäss dem ersten Teil des Patentanspruchs 1.

Sie baut auf auf einer Vorrichtung, die durch die DE-A-3 109 562 bekannt geworden ist. Bei dieser Vorrichtung fördern die Schnecken in der gleichen Richtung. Dementsprechend sind die Ausfallöffnungen nebeneinander an einer Seite des Behälters angeordnet. Der Querschnitt der Ausfallöffnungen ist quadratisch. Eine Verteilung des Gutes in Achsrichtung der Schnecken findet daher nicht statt.

In der DE-A-2 415 593 ist ein Silo für schüttfähige Güter, insbesondere für schwerfliessende Chemie- und Mineralstoffe, beschrieben, bei dem an der Entnahmeöffnung mindestens ein Paar von achsparallel zueinander, wenigstens annähernd horizontal und mit ihren Schneckenwänden miteinander kämmender Schnecken angeordnet ist. In dieser Schrift wird auch eine Vorrichtung erwähnt, bei der unter einer gemeinsamen Entnahmeöffnung zwei Paare von Schneckenförderern mit untereinander parallelen Drehachsen angeordnet sind, wobei jedes der beiden Paare zu je einem von zwei Abzugskanälen gehört.

Beide Schneckenpaare liegen in einem eigenen Schneckentrog und teilen das Gut in zwei Ströme auf, die über zwei auf der gleichen Seite gelegene Abzugkanäle abfliessen.

Mit dieser Vorrichtung lassen sich grossflächige Transportbänder nicht gleichmässig belegen. Das Gut wird von den Schnecken zu den Abzugkanälen gepresst. Da überschüssiges Gut in den letzten Schneckengängen verbleibt, wird es von diesen dauernd komprimiert, was bei empfindlichem Gut, z.B. bei Zuckerrübenschnitzeln, zu Zusammenbackungen führt. Dies ist vor allem nachteilig, falls das Gut locker aus Transportbänder aufgegeben werden muss, wie es z.B. bei der Belegung von Transportbändern von Trocknern der Fall ist. Darüber hinaus ist der Übergang von Gut von einem Trog zum anderen, um eine gleichmässige Verteilung zu erreichen, nicht möglich.

Der Erfindung liegt die Aufgabe zugrunde, eine Vorrichtung gemäss dem ersten Teil des Patentanspruchs 1 so zu gestalten, dass es möglich ist, auch ein zum Kleben neigendes Schüttgut zwischenzubunkern und wahlweise ein oder zwei Transportbänder mit einer gleichmässigen, lockeren Schicht zu belegen, deren Höhe veränderlich einstellbar ist.

Diese Aufgabe wird durch die im Patentanspruch 1 angegebenen Merkmale gelöst. Durch die entgegengesetzt fördernden Schnecken wird das Gut in einer Umlaufbewegung gehalten, die eine gleichmässige Verteilung in beiden Trögen sicherstellt. Das überschüssige, nicht durch den Ausfallschlitz ausgefallene Gut tritt am Trogende in den anderen Trog über und wird von dort zum entgegengesetzten Ausfallschlitz befördert. Der Schüttgutdosierer ermöglicht ein gleichmässiges Abziehen des Schüttguts aus dem Behälter. Dabei lässt sich der abgezogene Gutstrom über die Drehgeschwindigkeit des Käfigs einstellen. Durch die Förderung des Gutes über einen feststehenden Tisch zur Abfallkarte wird ein kontinuierliches Abrieseln erreicht.

Die Flügelschnecken nach Anspruch 2 fördern das Gut, ohne es zusammenzupressen, und gleichzeitig lockern sie es vorteilhaft auf.

Durch die Zwischenwände gemäss Anspruch 3 wird die Reibung zwischen den entgegengesetzt sich bewegenden Gutströmen minimiert.

Durch das Merkmal des Anspruchs 4 kann die Abfallkante des Tisches verstellt werden.

Durch das Merkmal des Anspruchs 5 wird ein Zusammenpressen des Gutes bei der Übernahme durch den Schüttgutdosierer vermieden.

Durch das Merkmal des Anspruchs 6 lässt sich die notwendige Leistung des Antriebs des Dosierers verringern, da dieser nur abwärts fördert.

Es hat sich als vorteilhaft erwiesen, wenn die tangentialen Förderrichtungen der Schnecke und des zugeordneten Dosierers an der Übergabestelle gleichgerichtet sind. Dies wird mit dem Merkmal des Anspruchs 7 erreicht.

Die Zeichnungen dienen zur Erläuterung der Erfindung anhand eines vereinfacht dargestellten Ausführungsbeispiels.

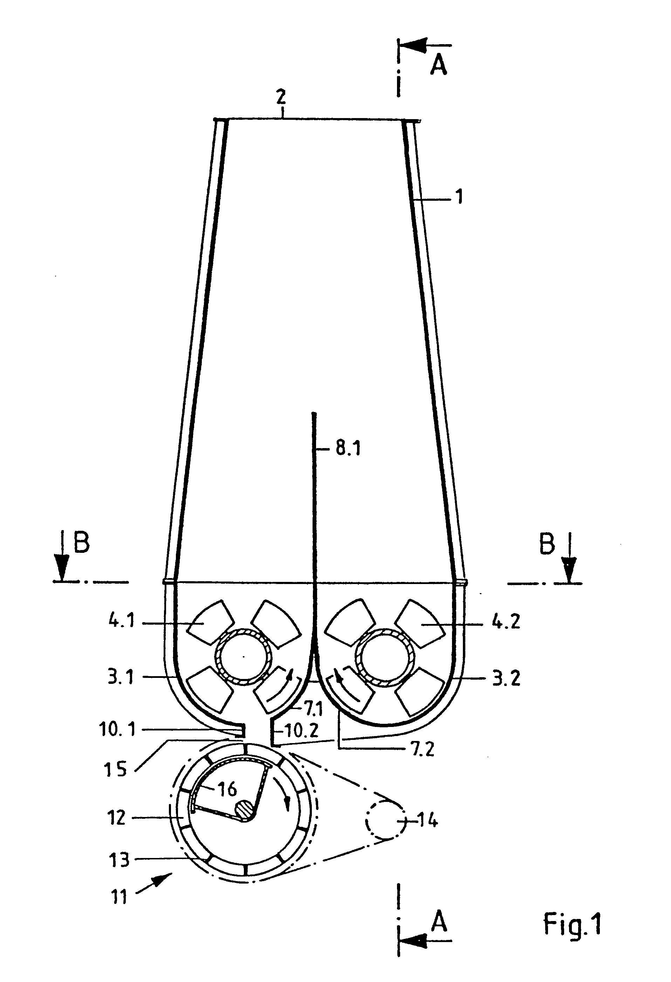

Fig. 1 zeigt einen Querschnitt durch eine Vorrichtung mit den erfindungsgemässen Merkmale.

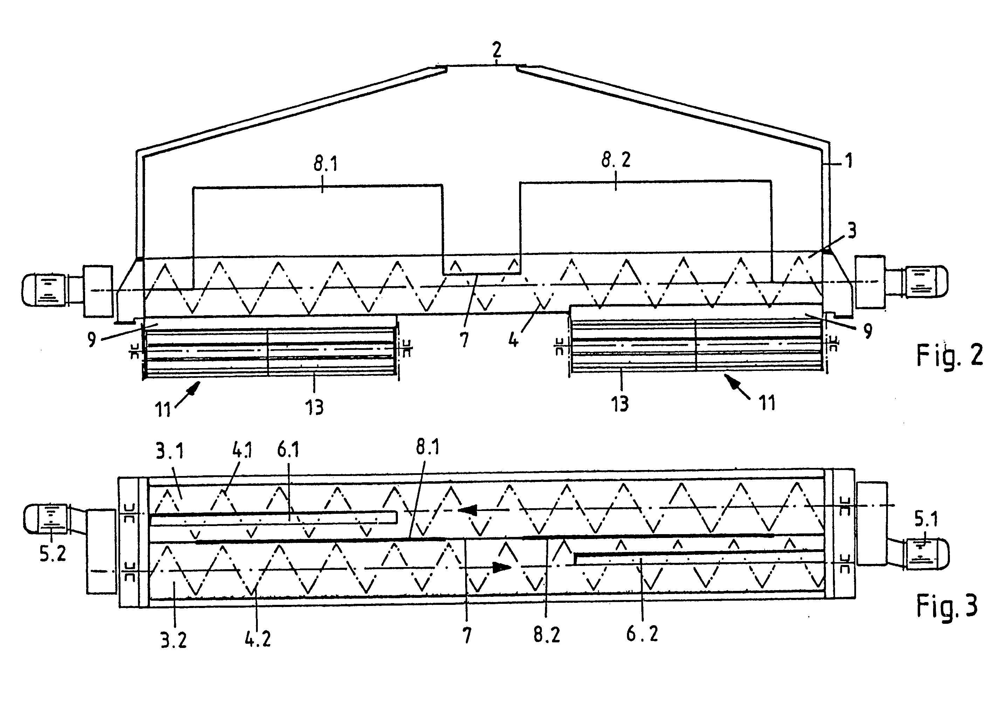

Fig. 2 zeigt einen Schnitt entlang der Linie A/A von Fig. 1.

Fig. 3 zeigt einen Schnitt entlang der Linie B/B von Fig. 1.

Die erfindungsgemässe Vorrichtung ist in der vorliegenden Ausführungsform als integrierter Bauteil eines Niedertemperaturtrockners für Zuckerrübenschnitzel ausgelegt. Sie belegt zwei Transportbänder des Trockners gleichmässig. Gleichzeitig dichtet das Puffervolumen im Behälter den Trockner gegen die Umgebung ab.

Die Vorrichtung besteht aus einem aufrechten Behälter 1, der oben eine Beschickungsöffnung 2 aufweist und unten mit zwei unmittelbar nebeneinander auf gleicher Höhe liegenden Schneckentrögen 3.1, 3.2 abgeschlossen ist. Für ein störungsfreies Nachrutschen der Rübenschnitzel erweitert sich der Querschnitt des Behälters nach unten. In jedem Trog 3.1, 3.2 ist waagerecht eine durchgehende Flügelschnecke 4.1, 4.2 mit Antrieb 5.1, 5.2 angeordnet, die identisch ausgeführt sind und sich gegensinnig drehen; in der vorliegenden Ausführungsform bewegen sich die benachbarten Seiten der Flügelschnecken 4 aufwärts. Der Boden jedes Troges 3 weist an dem Ende, zu dem die zugehörige Schnecke 4 fördert, einen längslaufenden Ausfallschlitz 6.1, 6.2 auf, der vom Trogende sich zur Mitte erstreckt und dessen Länge auf die Breite des zu belegenden Transportbandes abgestimmt ist, im vorliegenden Beispiel beträgt sie ca. 3 m bei ca. 8 m Troglänge.

Die aneinander grenzenden Seitenwände 7.1, 7.2 der Tröge 3.1, 3.2 laufen etwa in Höhe der Drehachsen der Schnecken 4 zusammen. Im Bereich der Ausfallschlitze 6 sind sie bis über den Umfang der Schnecken 4 hinaus mit Zwischenwänden 8.1, 8.2 nach oben verlängert, die jedoch in einem gewissen Abstand, hier ca. 60 cm, vor den Trogenden enden. An den Trogenden enden die Seitenwände 7 auf Höhe der Drehachsen der Schnecken 4. Jeder Ausfallschlitz 6 ist von einem nach unten weisenden Ausfallschacht 9 eingefasst, dessen äussere Längswand 10.1 gegenüber der inneren Längswand 10.2 verkürzt ist. Die Ausfallschlitze 6 und damit auch die Ausfallschächte 9 sind seitlich neben der tiefsten Bodenlinie der Tröge nach innen versetzt angebracht, wobei die äusseren, kürzeren Längswände 10.1 entlang dieser Scheitellinie verlauen.

Unmittelbar an jedem Ausfallschacht 9 schliesst sich je ein Schüttgutdosierer 11 in Form eines waagrechten, zylinderförmigen Käfigs 12 an, der sich jeweils über die Länge eines Ausfallschlitzes 6 erstreckt und dessen äusserer Umfang in etwa dem äusseren Umfang der Schnecken 4 entspricht. Ein Käfig 12 baut sich aus achsparallelen Förderleisten 13 — hier hochkant stehende Flacheisen — auf und wird von einem regelbaren Getriebemotor 14 gegensinnig zur darüberliegenden Schnecke 4 rotierend angetrieben, wobei die Drehachsen der Käfige 12 und der zugehörigen Schnecken 4 in einer senkrechten Ebene liegen. Der äussere Umfang des Käfigs 12 reicht unmittelbar, jedoch reibungsfrei, bis an die innere, tiefer reichende Längswand 10.2 des Ausfallschachtes 9.

Im Inneren des Käfigs 12 erstreckt sich über seine gesamte Länge ein im Betrieb feststehender Tisch 16, der in Form einer Zylinderschale den rotierenden Käfig 12 im Bereich des Ausfallschachtes 9 von innen abdeckt. Der Spakt 15 zwischen der äusseren, kürzeren Längswand 10.1 und dem Tisch 16 entspricht zumindest der Hälfte der Breite des Ausfallschlitzes 6. Durch Schwenken des Tisches 16 um die Käfigachse kann die Lage der Abfallkante des Tisches 16 zur inneren Längswand 10.2 dem Gutsschüttwinkel angepasst werden.

Der Abstand des Tisches 16 zu den Förderleisten 13 ist so gewählt, dass diese sich reibungsfrei bewegen können, ohne das Gut dazwischen eindringen kann. Unterhalb jedes Käfigs 12 verläuft je ein nicht dargestelltes waagrechtes Förderband eines Niedertemperaturtrockners, dessen Breite der des Ausfallschlitzes 6 entpsricht.

Im Betrieb wird der Behälter 1 von oben über die Öffnung 2 mit dem Schüttgut, im vorliegden Beispiel Zuckerrübenschnitzel, beschickt. Die Beschickung erfolgt derart, dass der Behälter 1 jeder Zeit bis oberhalb der Schneckentröge 3 gefüllt ist. Die Flügelschnecken 4 befördern das Gut zu den jeweiligen Ausfallschlitzen 6, gleichzeitig lockern sie das Gut auf und verhindern so Brückenbildungen im Behälter 1. Durch die Ausfallschlitze 6 fällt das Gut in die Ausfallschächte 9, von dort wird es mit den Schüttgutdosierern 11 abgezogen. Überschüssiges Gut, das nicht durch die Ausfallschlitze 6 ausfällt, wird am Ende der Tröge 3 von den Flügeln der Schnecken 4 in den jeweils anderen Trog 3 befördert, wo es von der entgegengesetzt fördernden Schnecke 4 zum anderen Ausfallschlitz 6 transportiert wird. So entsteht eine horizontale Umlaufbewegung von lockerem Gut, die eine gleichmässige Beschickung der beiden Transportbänder des Trockners gewährleistet. Die Reibung zwischen den beiden sich gegeneinander bewegenden Gutsströmen wird durch die Zwischenwände 8 verringert, was eine kleinere Dimensionierung der Antriebe 5 ermöglicht.

Aus den Ausfallschächten 9 füllen sich die von zwei benachbarten Förderleisten 13 und dem Tisch 16 gebildeten Kammern mit Gut. Dieses wird von den Förderleisten 13 über die Tischkante gezogen und fällt in lockerer Schüttung auf die Transportbänder. Die Schichtdicke auf dem Band lässt sich in Abhängigkeit von der Geschwindigkeit der Transportbänder über die Rotationsgeschwindigkeit der Käfige 12 variieren. Ebenso ist es durch die Verstellbarkeit des Tisches 16 möglich, die Abfallkante des Gutes vom Tisch 16 dem Schüttwinkel des gutes anzupassen. Dadurch lässt sich sowohl der Förderweg auf der Tischfläche minimieren, als auch das Austreten von Gut bei stillstehendem Käfig 12 vermeiden; somit kann die Vorrichtung auch mit nur einem Dosierer 11 betrieben werden.

Durch den Spalt 15 zwischen dem Tisch 16 und der äusseren Längswand 10.1 des Ausfallschachtes 9 kann sich im Ausfallschacht 9 eine lockere Schüttung bilden. Ein Zusammenpressen des Gutes durch die in den Ausfallschacht 9 einlaufende Förderleiste 13 findet nicht statt, da das Gut durch den Spalt 15 ausweichen kann.

Die erforderliche Antriebsleistung der Getriebemotoren 14 der Käfige 12 wird durch die dezentrale Anordnung der Ausfallschächte 6 entscheidend verringert. Da das Gut von dem Schüttgutdosierer 11 nur abwärts gefördert wird, braucht keine Hubarbeit aufgebracht zu werden.

**Patentansprüche**

1. Vorrichtung zum Zwischenbunkern und Austragen von Schüttgütern, insbesondere Zuckerrübenschnitzeln, mit einem aufrechten Behälter (1), mit zwei parallelen, horizontalen Schnecken (4.1, 4.2), die in zwei unmittelbar nebeneinanderliegenden, den Behälterboden bildenden Schneckentrögen (3.1, 3.2) angeordnet sind, deren aneinandergrenzende Seitenwände (7.1, 7.2) zumindest an den Trogenden von geringerer Höhe sind als der Umfang der Schnecken (4.1, 4.2), und mit je einer Ausfalöffnung (6.1, 6.2) in den beiden Schneckentrögen (3.1, 3.2) jeweils an dem Ende, zu dem die zugehörige Schnecke (4.1, 4.2) fördert, dadurch gekennzeichnet, dass die Ausfallöffnungen (6.1, 6.2) an entgegengesetzten Enden der beiden Schneckentröge (3.1, 3.2) angeordnet, als längslaufende Ausfallschlitze ausgebildet und von je einem Ausfallschacht (9) umschlossen sind und dass unmittelbar unter jedem Ausfallschacht (9) ein Schüttgutdosierer (11) angeordnet ist, bestehend aus einem um eine waagrechte Achse rotierend angetriebenen Käfig (12), der aus achsparallelen, auf der Mantelfläche eines Zylinders liegenden Förderleisten (13) aufgebaut ist, und aus einem festehenden, zylinderschalenförmigen Tisch (16) im Innern des Käfigs (12), der den rotierenden Käfig (12) im Bereich des Ausfallschachtes (97 von innen abdeckt.

2. Vorrichtung nach Anspruch 1, gekennzeichnet durch die Verwendung von Flügelschnecken.

3. Vorrichtung nach Anspruch 1 oder 2, dadurch gekennzeichnet, dass zwischen den Schneckentrögen (3.1, 3.2) in den Bereichen der beiden Ausfallschlitze (6.1, 6.2), ausgenommen je einen Teilbereich an den beiden Trogenden, Zwischenwände (8.1, 8.2) angeordnet sind, die über den Umfang der Schnecken (4.1, 4.2) hinausreichen.

4. Vorrichtung nach einem der Ansprüche 1 bis 3, gekennzeichnet durch einen um die Käfigachse schwenkbaren Tisch (16).

5. Vorrichtung nach einem der Ansprüche 1 bis 4, dadurch gekennzeichnet, dass der Abstand der sich in Drehrichtung des Käfigs (12) vorne befindenden Längswand (10.1) des Ausfallschachts (9) vom Tisch (16) mindestens die Hälfte der Ausfallschlitzbreite beträgt und dass die entgegengesetzte Längswand (10.2) bis unmittelbar an den Käfig (12) reicht.

6. Vorrichtung nach einem der Ansprüche 1 bis 5, dadurch gekennzeichnet, dass sich der Ausfallschacht (9) über dem abwärts drehenden Teil des Käfigs (12) befindet.

7. Vorrichtung nach einem der Ansprüche 1 bis 6, dadurch gekennzeichnet, dass die Drehrichtung einer Schnecke (4.1, 4.2) der Drehrichtung des darunter angeordneten Käfigs (12) entgegengesetzt ist.

**Claims**

1. A device for temporarily storing and evenly overlaying conveyor belts with bulk materials with, especially sugar beet slices, with a vertical container (1), with two parallel, horizontal screws (4.1, 4.2), which are arranged in two directly adjacent screw troughs (3.1, 3.2) forming the container base and the adjacent lateral walls (7.1, 7.2) of the troughs are at least at the trough ends lower in height than the circumference of the screws (4.1, 4.2), and with a respective discharge opening (6.1, 6.2) in both the screw troughs respectively on the end to which the associated screw (4.1, 4.2) conveys, characterised in that the discharge openings (6.1, 6.2) are arranged on opposite ends of both screw conveyor troughs (3.1, 3.2), are formed as longitudinal discharge slots and enclosed by a respective discharge shaft (9) and that directly below each discharge shaft (9) a bulk material metering device (11) is disposed, comprised of a cage (12) rotatably driven about a horizontal axis and constructed from axially parallel conveyor strips (13) disposed on the surface of a cylinder, and a rigid, cylinder shell-shaped table (16) inside the cage (12), which covers the rotating cage (12) in the region of the discharge shaft (9) from inside.

2. A device according to claim 1, characterised by the use of blade screws.

3. A device according to claim 1 or 2, characterised in that between the screw troughs (3.1, 3.2) in the regions of both discharge slots (6.1, 6.2), except for a respective partial region at both trough ends, bulkheads (8.1, 8.2) are arranged which project beyond the circumference of screw conveyors (4.1, 4.2).

4. A device according to any one of claims 1 to 3, characterised by a table pivotable about the cage axis (16).

5. A device according to any one of claims 1 to 4, characterised in that the distance of the longitudinal wall (10.1) of the discharge shaft (9) located at the front in the direction of rotation of the cage (12) from the table (16) is at least half the breadth of the discharge slot breadth, and that the opposite longitudinal wall (10.2) extends directly up to the cage (12).

6. A device according to any one of claims 1 to 5, characterised in that the discharge shaft (9) is located above the downwardly rotating portion of the cage (12) disposed therebelow.

7. A device according to any one of claims 1 to 6, characterised in that the direction of rotation of a screw (4.1, 4.2) is counter to the direction of rotation of the cage (12) disposed therebelow.

**Revendications**

1. Dispositif pour emmagasiner temporairement et décharger des matériaux en vrac, en particulier des cossettes de betteraves sucrières, comprenant un récipient en position droite (1), deux vis sans fin horizontales, parallèles (4.1, 4.2), qui sont agencées dans deux auges (3.1, 3.2) qui sont disposées immédiatement l'une à côté de l'autre et forment le fond du récipient et dont les parois latérales adjacentes (7.1, 7.2) ont, au moins aux extrémités d'auge, une hauter inférieure à la périphérie des vis (4.1, 4.2), et une pouverture d'évacuation (6.1, 6.2) dans chacune des deux auges à vis (3.1, 3.2), chaque fois à l'extrémité vers où la vis correspondante (4.1, 4.2) avance, caractérisé en ce que les ouvertures d'évacuation (6.1, 6.2) sont agencées aux extrémités opposées des deux auges à vis (3.1, 3.2), en ce qu'elles sont réalisées sous la forme de fentes d'évacuation longitudinales et entourées chacune par un puits de décharge (9) et en ce que, directement en dessous de chaque puits de décharge (9), est agencé un doseur de matériau en vrac (11) constitué d'une cage (12) qui est entraînée en rotation autour d'un axe horizontal et qui est constituée de barres d'avancement (13) à axes parallèles qui sont situées sur la surface d'enveloppe d'un cylindre, et d'un plateau fixe (16), en forme de coque cylindrique, qui est situé à l'intérieur de la cage (12) et qui recouvre l'intérieur de la cage rotative (12), dans la zone du puits de décharge (9).

2. Dispositif suivant la revendication 1, caractérisé par l'utilisation de vis sans fin à ailettes.

3. Dispositif suivant l'une des revendications 1 et 2, caractérisé en ce que des parois intercalaires (8.1, 8.2), qui font saillie au-dessus de la périphérie des vis (4.1, 4.2), sont agencées entre les auges à vis (3.1, 3.2) dans les zones des deux fentes d'évacuation (6.1, 6.2), à l'exception d'une zone partielle à chacune des deux extrémités d'auge.

4. Dispositif suivant l'une des revendications 1 à 3, caractérisé par un plateau (16) capable de pivoter autour de l'axe de la cage.

5. Dispositif suivant l'une des revendications 1 à 4, caractérisé en ce que la distance entre la paroi longitudinale (10.1) du puits de décharge (9), qui se trouve à l'avant dans le sens de rotation de la cage (12), et le plateau (16) est d'au moins la moitié de la largeur de la fente d'évacuation et en ce que la paroi longitudinale opposée (10.2) va jusqu'à proximité immédiate de la cage (12).

6. Dispositif suivant l'une des revendications 1 à 5, caractérisé en ce que le puits de décharge (9) se trouve au-dessus de la partie tournant vers le bas de la cage (12).

7. Dispositif suivant l'une des revendications 1 à 6, caractérisé en ce que le sens de rotation d'une vis sans fin (4.1, 4.2) est opposé au sens de rotation de la cage (12) sous-jacente.

Fig.1

Fig. 2

Fig. 3

0 174 440